Europäisches Patentamt

European Patent Office

Office européen des brevets

(19)

(11) **EP 0 711 069 A1**

(12) **EUROPEAN PATENT APPLICATION**

(43) Date of publication:
08.05.1996 Bulletin 1996/19

(51) Int. Cl.$^6$: **H04N 1/64**

(21) Application number: **95307875.5**

(22) Date of filing: **03.11.1995**

(84) Designated Contracting States:
**DE FR GB**

(30) Priority: **04.11.1994 JP 271071/94**

(71) Applicant: **CANON KABUSHIKI KAISHA Tokyo (JP)**

(72) Inventor: **Hirabayashi, Yasuji,
c/o Canon K.K.
Ohta-ku, Tokyo (JP)**

(74) Representative: **Beresford, Keith Denis Lewis et al
BERESFORD & Co.
2-5 Warwick Court
High Holborn
London WC1R 5DJ (GB)**

(54) **Image processing method and apparatus**

(57) The present invention intends to encode a palette image effectively. The encoding method of a palette image represented by a palette composed of the limited number of colors or gradations and a two-dimensional arrangement of an index of the palette, comprises steps of sorting the palette in a predetermined order, (i.e. rearranging the order of the palette on the basis of the luminance of each colour contained in the palette) storing correspondence of the index of the palette to the predetermined order, and encoding the palette image every bit plane of each index of the palette on the basis of the correspondence.

*FIG. 1*

EP 0 711 069 A1

**Description**

BACKGROUND OF THE INVENTION

Field of the Invention

The present invention relates to image processing method and apparatus for processing a palette image.

Related Background Art

A digital image has various kind of expressions such as a binary image, a multi-value image, a monochrome image, a color image and the like. Among these images, a multi-value color image is the most excellent image in a point that it has natural and variety representation. The multi-value color image usually used is expressed by 8-bit data for each of RGB colors. Each color can be expressed in 256 gradations, that is, 16,700,000 colors are available as the number of colors. However, an image of 8-bit data for each of RGB colors comes to have vast data, thereby resulting in a hard treatment. Therefore, a palette image comes to be utilized. The palette image using 256 colors is usually utilized because of convenience of data treating. In the above example, the palette image is composed of, so called, palette data and image data. In the palette data, 256 colors which are frequently used in an ordinary image are selected and their color components (R, G and B values) are arranged. In the image data, each pixel in the image is replaced by an index within a palette by replacing each pixel by the color nearest to this pixel within the palette.

In the above example, since the palette image has the palette of 256 colors, 8-bit data is required to express the index.

Since the palette image explained in the above example has already encoded, when this palette image has to be compressed, a reversible encoding is required. Conventionally, a compression-utilizing a Lempel Ziv method or a run statistic (the former is a GIF system and the latter is a BMP system) had been used. However, since a correlation between adjacent pixels value is weak in the palette image, a large compressive effect could not be obtained.

Particularly, in a case where image data of a photograph or the like is converted into the palette image, such a problem becomes serious.

In a case where a binary reversible encoding of the palette image is performed every bit plane, since all bit planes have no correlation with adjacent pixels, there also occurs such the problem as the compressive effect can not be obtained.

SUMMARY OF THE INVENTION

A concern of the present invention is to alleviate the above-mentioned problem.

An embodiment of the present invention provides a palette image forming method which effectively utilizes information regarding lightness of palette data.

In accordance with the present invention, there is disclosed an image processing method comprising steps of: generating palette data which defines relation between an index number and a plurality of color component data, converting input color image into palette image by using the palette data, and outputting the palette image, wherein the index number has a correlation with lightness information of the plurality of color component data.

Still another concern of the present invention is to compress a palette image effectively.

In accordance with another aspect of the invention image processing includes an encoding method of the palette image represented by a palette composed of the limited number of colors or gradations and a two-dimensional arrangement of an index of the palette, wherein the palette is re-arranged in a predetermined order, correspondence of the index of the palette to the predetermined order is stored, and the palette image is encoded every bit plane of each index of the palette on the basis of the correspondence.

A feature of the present invention is to provide an image processing method capable of effectively performing a display of the palette image.

Other features of the present invention will become apparent from the following description based on the drawings and appended claims.

BRIEF DESCRIPTION OF THE DRAWINGS

Fig. 1 is an entire block diagram of a palette image encoder;
Figs. 2A to 2C are flow charts of an encoding process;
Figs. 3A to 3C are views showing a conversion example of palette data;
Figs. 4A to 4C are views showing a conversion example of a palette image;
Figs. 5A to 5C are views showing bit planes; and
Fig. 6 is a block diagram for explaining a second embodiment of the present invention.

DETAILED DESCRIPTION OF THE PREFERRED EMBODIMENTS

Embodiments of the present invention described hereinafter intend to effectively compress a palette image represented by a two-dimensional arrangement of an index of a palette which is composed of a limited number of colors or gradations. At first, luminance of each color contained in the palette of the palette image (it may be lightness or, for example, it may be a G component of RGB signals) is calculated to sort or re-arrange the order of the palette on the basis of the luminance, and the index in the palette indicated by each pixel value is converted into an index depending on the new order.

Accordingly, the palette image becomes similar to a luminance image so that a correlation of pixel value becomes remarkable among adjacent pixels. Further, by gray-code converting the pixel value, the palette image can be converted into such form as the inversion of bit in each bit plane becomes rare. Therefore, an intended effect can be obtained by a binary reversible encoding for each bit plane.

The embodiments will be described practically hereinafter.

[First Embodiment]

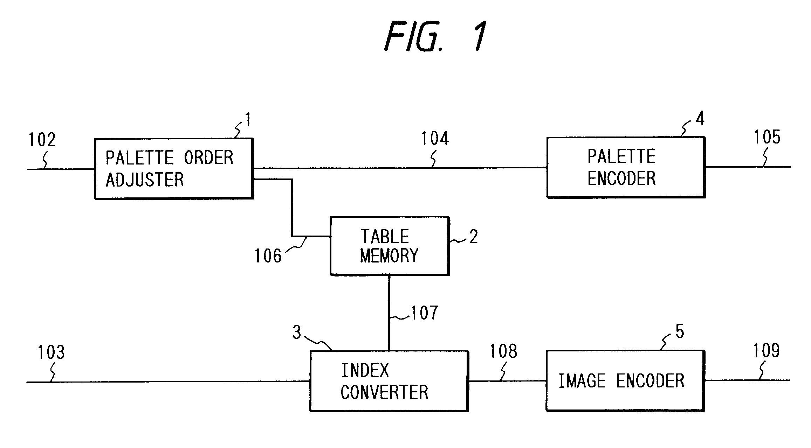

Fig. 1 is a block diagram of a palette image encoder according to a first embodiment of the present invention. Reference numeral 1 denotes a palette order adjuster, 2 denotes a table memory, 3 denotes an index converter, 4 denotes a palette encoder and 5 denotes an image encoder.

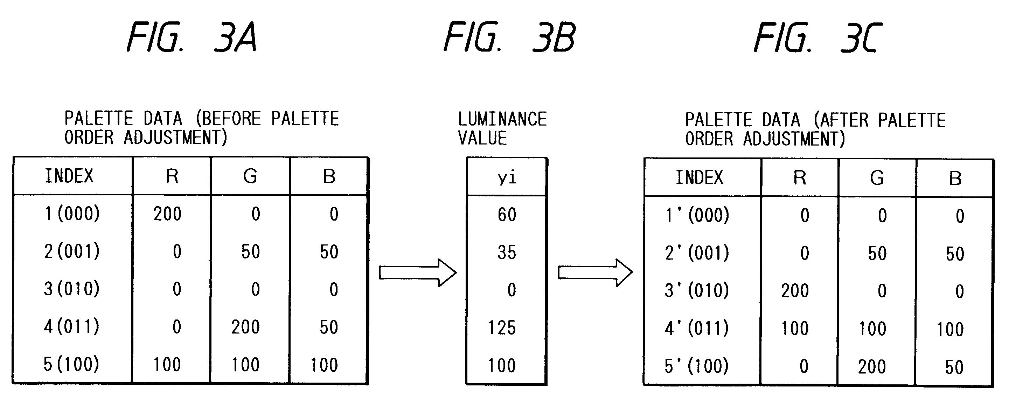

At first, palette data (data indicating correspondence of an index to R, G and B values (Fig. 3A) is input to the palette order adjuster 1 through a transmission path 102. The transmission path 102 is connected to a host computer from which the palette data is supplied. When it is assumed that the number of colors of a palette to be input is n (in Figs. 3A to 3C, the number of colors is five), the R, G and B values corresponding to each index $i$ is assumed as $r_i$, $g_i$ and $b_i$. In the palette order adjuster 1, a luminance value $y_i$ ($y_i = 0.3R + 0.6G + 0.1B$) corresponding to ith color is respectively calculated for $i = 0$ to n-1 depending on each value of $r_i$, $g_i$ and $b_i$ (Fig. 3B). Then, a palette ($r_i$, $g_i$, $b_i$) is sorted in the ascending order of power (in the order from a small one) based on magnitude of $y_i$ (Fig. 3C).

At this time, it is assumed that the ith color becomes i'th color after performing the sort. Here, a conversion f by a conversion table is defined as $f(i) = i'$. The palette order adjuster 1 outputs thus obtained newly-arranged palette data to the palette encoder 4 via a transmission path 104. The palette encoder 4 encodes the newly-arranged palette data. The corresponding relation of f is written in the table memory 2.

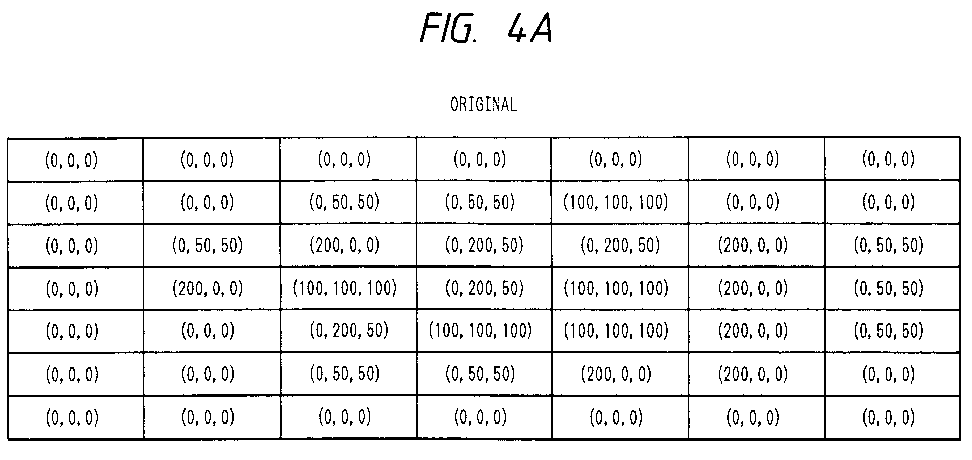

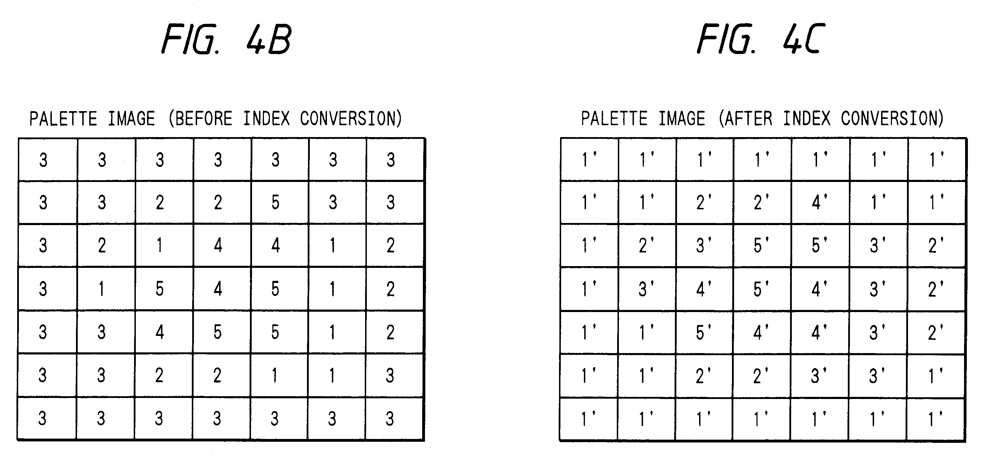

Next, a palette image (Fig. 4B) which represents an original image (Fig. 4A) is input to the index converter 3 through a transmission path 103 from the host computer. Each pixel value of the palette image input through the transmission path 103 is represented by the index of the palette data transmitted through the transmission path 102. For the palette image, an index conversion is performed in the index converter 3 (Fig. 4C). That is, it is assumed that input image data is represented by d, the value of data is rewritten by the conversion of $d \rightarrow f(d)$.

At this time, contents of the table memory 2 is referred through a transmission path 107. The data converted into f(d) is further converted into a gray code. A gray code conversion is defined by the following equation.

If it is assumed that a bit of the binary number indicating f(d) is b(i) ($i = 0$ is assumed as LSB) and a bit after performing the conversion is t(i).

$$t(i) = b(i) \oplus b(i+1) \; / \; \oplus \text{ indicating EXOR}$$

$$t(n-1) = b(n-1) \; / \; \text{MSB}$$

The palette image to which the index conversion depending on the table memory and the gray code conversion are performed is input to the image encoder 5. The image encoder 5 develops a supplied image onto a bit plane to perform an encoding in a binary reversible encoding method. At this time, as the encoding method, a system utilizing an arithmetical encoding, so called a JBIG system, or a reversible encoding system such as MH, MR, MMR or the like used in a conventional facsimile apparatus may be utilized. Considering an efficiency, the arithmetical encoding such as the JBIG system is preferable. Both of thus obtained code data of the palette arranged in the new order and image code data encoded each bit plane become a final code output which is to be output to an external device such as an image filling device and a communication device through transmission paths 105 and 109 respectively.

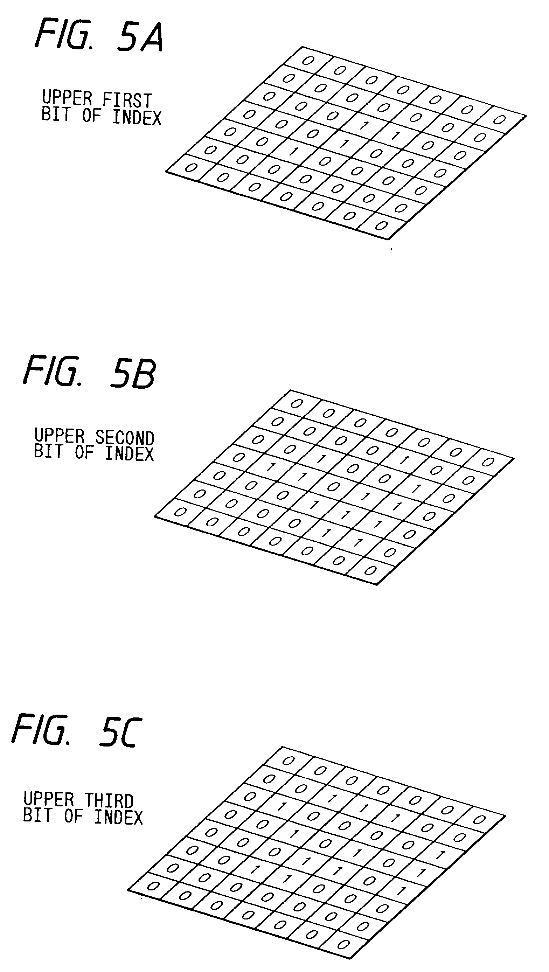

It should be noted that, as shown in Figs. 5A to 5C, the binary reversible encoding may be performed each bit plane from an upper bit of the index, without converting the palette image into the gray code. In this case, especially, encoding efficiency of the upper bit becomes high.

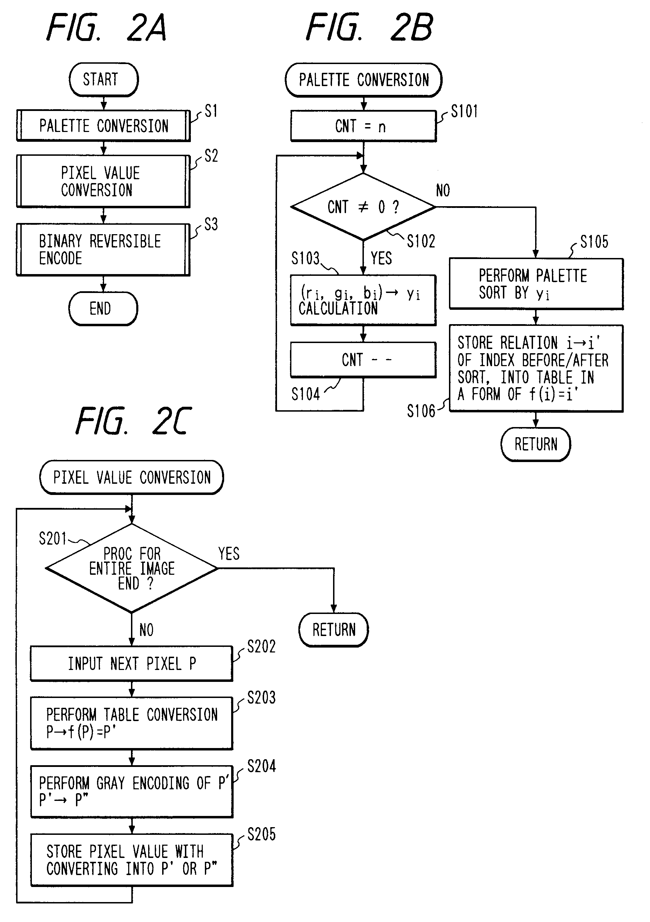

Figs. 2A to 2C are flow charts showing examples for performing above procedure on the basis of software (i.e., programs of computer).

Fig. 2A is a view for explaining an entire process flow. In the step S1, a palette conversion process in the palette order adjuster 1 shown in Fig. 1 is executed.

Details of the process flow are shown in Fig. 2B. In the step S101, the index number of the palette is set as CNT = n. In the step S103, the ith luminance value $y_i$ is calculated. The process is repeated until CNT = 0 by the steps S104 and S102. In the step S105, the index of the palette is sorted in the ascending order of power in accordance with the value of $y_i$. In the step S106, the relation between the index i of before sorting and the index i' of after sorting is stored as table data in a form of $f(i) = i'$.

Next, in the step S2 in Fig. 2A, a pixel value conversion of the palette image is performed.

Details of the conversion are shown in Fig. 2C. In the step S203, a table conversion of $P \rightarrow f(P) = P'$ is performed. In the step S204, the obtained P' may further be gray encoded so that $P' \rightarrow P''$. A gray encoding is a conversion for converting image data into the palette image, which contains only the luminance value $y_i$. In the step S205, an image value is replaced by P' or P'' and then stored. In the steps S201 and S202, the above-mentioned process is executed for an entire image.

At last, in the step S3 shown in Fig. 2A, the palette image which has been pixel-value replaced is encoded each bit plane. As this encoding method, a binary reversible encoding system is preferable.

As described above, according to the present invention, the palette image can be effectively compressed without deteriorating an image quality.

Also, according to the present embodiment, when an encoding is performed, the palette is inevitably re-arranged in the order of luminance and the palette image corresponding to the re-arranged palette is decoded. Therefore, the palette image of which luminance is arranged in the order has already been used. Thus, a palette id is assumed as the luminance to perform a monochrome display as it is, thereby resulting in such advantage as an excellent monochrome image can be obtained.

[Second Embodiment]

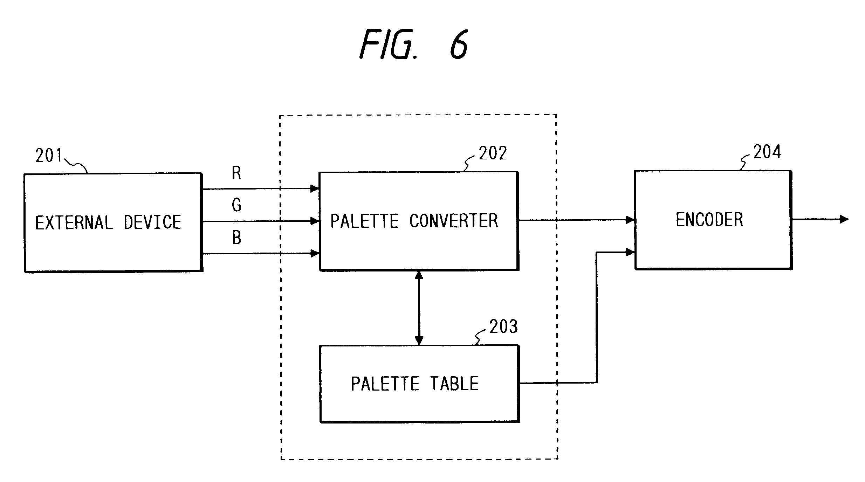

Fig. 6 is a block diagram showing the structure of a second embodiment of the present invention. In the above first embodiment, the case for being input a palette image from a host computer was explained. However, in the second embodiment, an original image is supplied as multi-value image data of R, G and B colors, from an external device 201 such as a color image scanner, a host computer or the like.

Then, a palette converter 202 converts the multi-value image data of R, G and B colors into the palette image with reference to a palette table 203, so as to output it to an encoder 204. It should be noted that, as shown in Fig. 3C, the content of the palette table 203 is such maintained as the index number is sorted on the basis of information regarding the lightness of R, G and B colors. As in the first embodiment, the encoder 204 performs a binary reversible encoding each bit plane.

In the above-mentioned example, palette data is sorted in the ascending order of power, however, it may be sorted in the descending order of power (in the order from a large one), and may be sorted in a predetermined order on the basis of the information regarding the lightness. The palette data and the palette image may be also input from not only the host computer or the like directly but also another terminal (a host computer, a facsimile apparatus or the like) through a line.

A program for performing the above-mentioned encoding method can be stored in a storage medium such as a floppy disk, an optical magnetic disk or the like. A computer cam perform the above-mentioned encoding on the basis of the program read out from the storage medium.

As described above, according to the present invention, the palette image can be effectively compressed.

The present invention is not limited to the above-mentioned embodiments, but can be modified and applied in various manners within the scope of following claims.

**Claims**

1. An image processing method comprising the steps of:

    generating palette data which defines the relationship between an index number and a plurality of color component data;

    converting an input color image into a palette image by using the palette data; and

    outputting the palette image,

    wherein the index number has a correlation with lightness information of the plurality of color component data.

2. A method according to claim 1, wherein the palette data is stored in a memory in a form of look-up table.

3. A method according to claim 1, wherein the input color image is supplied from an external device.

4. A method according to claim 1, further comprising the step of encoding the palette image in a predetermined encoding method.

5. A method according to claim 4, wherein the predetermined encoding method is a loss-less encoding method.

6. A method according to claim 4, wherein the predetermined encoding method is an encoding method for encoding the index number for each bit plane.

7. A method according to claim 6, wherein the predetermined encoding method is a binary encoding method.

8. An image processing apparatus comprising:

    generating means for generating palette data which defines the relationship between an index number and a plurality of color component data;

    converting means for converting an input color image into a palette image by using the palette data; and

    output means for outputting the palette image,

    wherein the index number has a correlation with lightness information of the plurality of color component data.

9. An image processing method for processing a palette image represented by a palette composed of the limited number of colors or gradations and a two-dimensional arrangement of an index of the palette, comprising the steps of:

    re-arranging the palette in a predetermined order;

    storing correspondence of the index of the palette to the predetermined order; and

    encoding the palette image for each bit plane of each index of the palette on the basis of the correspondence.

10. A method according to claim 9, wherein the predetermined order is an order according to luminance or lightness.

11. A method according to claim 9, wherein the encoding is a binary reversible encoding.

12. A method according to claim 9, wherein the correspondence is stored in a form of look-up table.

13. A method according to claim 9, wherein the palette image is encoded after performing a gray encoding on the basis of the predetermined order.

14. An image processing apparatus for processing a palette image represented by a palette composed of the limited number of colors or gradations and a two-dimensional arrangement of an index of the palette, comprising:
    re-arranging means for re-arranging the palette in a predetermined order;
    storage means for storing correspondence of the index of the palette to the predetermined order; and
    encoding means for encoding the palette image for each bit plane of each index of the palette on the basis of the correspondence.

15. Apparatus for processing digital colour image data in which luminance data from the image data is used in the generation of a palette image.

# FIG. 1

EP 0 711 069 A1

## FIG. 2A

START
↓
| PALETTE CONVERSION | S1

↓
| PIXEL VALUE CONVERSION | S2

↓
| BINARY REVERSIBLE ENCODE | S3

↓
END

## FIG. 2B

PALETTE CONVERSION
↓
| CNT = n | S101

↓
CNT ≠ 0 ?  — NO → 

S102

YES ↓ S103

| $(r_i, g_i, b_i) \rightarrow y_i$ CALCULATION |

↓
| CNT - - |

S104

NO → | PERFORM PALETTE SORT BY $y_i$ | S105

↓
| STORE RELATION $i \rightarrow i'$ OF INDEX BEFORE/AFTER SORT, INTO TABLE IN A FORM OF $f(i)=i'$ |

S106

↓
RETURN

## FIG. 2C

PIXEL VALUE CONVERSION
↓
S201 — PROC FOR ENTIRE IMAGE END ? — YES → RETURN

NO ↓
| INPUT NEXT PIXEL P | S202

↓
| PERFORM TABLE CONVERSION $P \rightarrow f(P)=P'$ | S203

↓
| PERFORM GRAY ENCODING OF P' $P' \rightarrow P''$ | S204

↓
| STORE PIXEL VALUE WITH CONVERTING INTO P' OR P'' | S205

## FIG. 3A

PALETTE DATA (BEFORE PALETTE ORDER ADJUSTMENT)

| INDEX | R | G | B |
|---|---|---|---|
| 1 (000) | 200 | 0 | 0 |
| 2 (001) | 0 | 50 | 50 |
| 3 (010) | 0 | 0 | 0 |
| 4 (011) | 0 | 200 | 50 |
| 5 (100) | 100 | 100 | 100 |

## FIG. 3B

LUMINANCE VALUE

| $y_i$ |
|---|
| 60 |
| 35 |
| 0 |
| 125 |
| 100 |

## FIG. 3C

PALETTE DATA (AFTER PALETTE ORDER ADJUSTMENT)

| INDEX | R | G | B |
|---|---|---|---|
| 1' (000) | 0 | 0 | 0 |
| 2' (001) | 0 | 50 | 50 |
| 3' (010) | 200 | 0 | 0 |
| 4' (011) | 100 | 100 | 100 |
| 5' (100) | 0 | 200 | 50 |

8

# FIG. 4A

ORIGINAL

| | | | | | | |
|---|---|---|---|---|---|---|
| (0, 0, 0) | (0, 0, 0) | (0, 0, 0) | (0, 0, 0) | (0, 0, 0) | (0, 0, 0) | (0, 0, 0) |
| (0, 0, 0) | (0, 0, 0) | (0, 50, 50) | (0, 50, 50) | (100, 100, 100) | (0, 0, 0) | (0, 0, 0) |
| (0, 0, 0) | (0, 50, 50) | (200, 0, 0) | (0, 200, 50) | (0, 200, 50) | (200, 0, 0) | (0, 50, 50) |
| (0, 0, 0) | (200, 0, 0) | (100, 100, 100) | (0, 200, 50) | (100, 100, 100) | (200, 0, 0) | (0, 50, 50) |
| (0, 0, 0) | (0, 0, 0) | (0, 200, 50) | (100, 100, 100) | (100, 100, 100) | (200, 0, 0) | (0, 50, 50) |
| (0, 0, 0) | (0, 0, 0) | (0, 50, 50) | (0, 50, 50) | (200, 0, 0) | (200, 0, 0) | (0, 0, 0) |
| (0, 0, 0) | (0, 0, 0) | (0, 0, 0) | (0, 0, 0) | (0, 0, 0) | (0, 0, 0) | (0, 0, 0) |

## FIG. 4B

PALETTE IMAGE (BEFORE INDEX CONVERSION)

| | | | | | | |
|---|---|---|---|---|---|---|
| 3 | 3 | 3 | 3 | 3 | 3 | 3 |
| 3 | 3 | 2 | 2 | 5 | 3 | 3 |
| 3 | 2 | 1 | 4 | 4 | 1 | 2 |
| 3 | 1 | 5 | 4 | 5 | 1 | 2 |
| 3 | 3 | 4 | 5 | 5 | 1 | 2 |
| 3 | 3 | 2 | 2 | 1 | 1 | 3 |
| 3 | 3 | 3 | 3 | 3 | 3 | 3 |

## FIG. 4C

PALETTE IMAGE (AFTER INDEX CONVERSION)

| | | | | | | |
|---|---|---|---|---|---|---|
| 1' | 1' | 1' | 1' | 1' | 1' | 1' |
| 1' | 1' | 2' | 2' | 4' | 1' | 1' |
| 1' | 2' | 3' | 5' | 5' | 3' | 2' |
| 1' | 3' | 4' | 5' | 4' | 3' | 2' |
| 1' | 1' | 5' | 4' | 4' | 3' | 2' |
| 1' | 1' | 2' | 2' | 3' | 3' | 1' |
| 1' | 1' | 1' | 1' | 1' | 1' | 1' |

# FIG. 5A

UPPER FIRST
BIT OF INDEX

# FIG. 5B

UPPER SECOND
BIT OF INDEX

# FIG. 5C

UPPER THIRD
BIT OF INDEX

## FIG. 6

201 EXTERNAL DEVICE

R
G
B

202 PALETTE CONVERTER

203 PALETTE TABLE

204 ENCODER

EP 0 711 069 A1

| | European Patent Office | EUROPEAN SEARCH REPORT | Application Number EP 95 30 7875 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | IBM TECHNICAL DISCLOSURE BULLETIN, vol. 31, no. 1, June 1988 NEW YORK, USA, pages 145-148, 'CODING METHOD FOR QUANTIZED COLOUR IMAGE' * the whole document * | 1-15 | H04N1/64 |
| A | ELECTRONICS LETTERS, vol. 30, no. 2, 20 January 1994 pages 120-121, L.-M. PO ET AL. 'BLOCK ADDRESS PREDICTIVE COLOUR QUANTIZATION IMAGE COMPRESSION' * the whole document * | 1-15 | |
| A | IEEE TRANSACTIONS ON SIGNAL PROCESSING, vol. 40, no. 1, January 1992 NEW YORK, USA, pages 232-236, MAJID RABBANI ET AL. 'CONDITIONING CONTEXTS FOR ARITHMETIC CODING OF BIT PLANES' * paragraph I * | 1,4-9, 11,13-15 | |
| A | US-A-5 278 678 (HARRINGTON) * abstract; figures 1-5 * | 1-3, 8-10,14, 15 | TECHNICAL FIELDS SEARCHED (Int.Cl.6) H04N |
| A | EP-A-0 292 284 (SONY) * abstract; figures 1-15 * | 1-3, 8-10,14, 15 | |
| A | PATENT ABSTRACTS OF JAPAN vol. 000 no. 0 (E-000) & JP-A-06 282251 (CANON) 7 October 1994, * abstract * | 1-3, 8-10,14, 15 | |
| | -/-- | | |

The present search report has been drawn up for all claims

| Place of search | Date of completion of the search | Examiner |
|---|---|---|
| THE HAGUE | 8 February 1996 | Kassow, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

European Patent Office

**EUROPEAN SEARCH REPORT**

Application Number

EP 95 30 7875

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | JOURNAL OF ELECTRONIC IMAGING, vol. 3, no. 1, January 1994 pages 45-59, JAN P. ALLEBACH ET AL. 'SEQUENTIAL SCALAR QUANTIZATION OF COLOUR IMAGES' ----- | | |

TECHNICAL FIELDS SEARCHED (Int.Cl.6)

The present search report has been drawn up for all claims

| Place of search | Date of completion of the search | Examiner |
|---|---|---|
| THE HAGUE | 8 February 1996 | Kassow, H |

EPO FORM 1503 03.82 (P04C01)